Europäisches Patentamt

European Patent Office

Office européen des brevets

(19)

(11) EP 0 747 321 A2

(12) EUROPEAN PATENT APPLICATION

(43) Date of publication:
11.12.1996 Bulletin 1996/50

(51) Int. Cl.⁶: C01B 31/08, C01B 31/14

(21) Application number: 96108943.0

(22) Date of filing: 04.06.1996

(84) Designated Contracting States:
DE FR GB IT NL

(30) Priority: 06.06.1995 JP 139458/95
27.10.1995 JP 280727/95

(71) Applicant: Mitsubishi Chemical Corporation
Chiyoda-ku Tokyo (JP)

(72) Inventors:
• Yoshino, Yoshio,
c/o Kurosaki Plant Mitsubishi
Kitakyushu-shi, Fukuoka 806 (JP)
• Matsumoto, Atsushi,
c/o Kurosaki Plant Mitsubishi
Kitakyushu-shi, Fukuoka 806 (JP)
• Ohishi, Kimitoshi,
c/o Kurosaki Plant Mitsubishi
Kitakyushu-shi, Fukuoka 806 (JP)
• Yoshida, Akihide,
c/o Kurosaki Plant Mitsubishi
Kitakyushu-shi, Fukuoka 806 (JP)

(74) Representative: TER MEER - MÜLLER -
STEINMEISTER & PARTNER
Mauerkircherstrasse 45
81679 München (DE)

(54) **Granulated active carbon and process for its production**

(57) Granulated active carbon having a specific surface area of from 60 to 3,000 $m^2/g$ as measured by a liquid nitrogen S-BET method (a multipoint method) and a degradation ratio of not higher than 1.5% as measured by a paint conditioner test method.

FIGURE I

EP 0 747 321 A2

## Description

The present invention relates to granulated active carbon and a process for its production. Particularly, it relates to granulated active carbon excellent in abrasion resistance during its handling and a process for its production.

Active carbon is used in e.g. gasoline vapor collecting devices (canisters) mounted on automobiles, gas masks or deodorizing equipments in plants or laboratories, and it is used for various applications to adsorb and remove various contaminants in a gas phase, or adsorb and remove metals, etc. in a waste liquid. As a method for producing active carbon, it has heretofore been known to produce active carbon by a reagent-activating method employing e.g. phosphoric acid or zinc chloride (Japanese Unexamined Patent Publications No. 146412/1991, No. 163020/1993 and No. 138010/1995). Namely, a wooden material such as a coconuts shell or wood, which is commonly used as a starting material, may be mixed with a reagent having a carbon-activating function, such as an aqueous phosphoric acid or zinc chloride solution, and the mixture is sufficiently impregnated and kneaded at a temperature of from room temperature to 200°C. Then, if necessary, a binder is added thereto to obtain a kneaded product, which is molded by e.g. granulation molding into granules having a particle size of from 0.35 to 10 mm. Then, the granules are baked at a temperature of from 500 to 700°C to obtain active carbon activated by the reagent.

In such a conventional production method, it is necessary to obtain granules having a regular shape and a surface configuration excellent in abrasion resistance by the granulation molding after the kneading treatment. If the surface configuration of the granules is a configuration inferior in the abrasion resistance, granulated active carbon obtainable by baking such granules, will have a weak surface layer and will be a product having a low commercial value which is susceptible to degradation during its handling. Accordingly, there have been some proposals, such as to control the condition for granulation molding by extrusion, to rotate granules to mechanically make the surface configuration excellent in the abrasion resistance or to add an additive at the time of the kneading treatment. However, no adequate method has been found. In such conventional production methods, it is necessary to remove the reagent used for activation or a compound formed by the activation reaction, after the activation treatment employing an aqueous phosphoric acid solution as the activating agent. A waste liquid containing the reagent used for activation or the compound formed by the activation reaction, generated in this step, is required to be recovered and detoxicated also from the viewpoint of the maintenance of the quality of water. Accordingly, in order to reduce the amount of a phosphorus compound discharged, it has been proposed to reduce the amount of phosphoric acid added or to install a large scale waste water treating installation. However, no adequate method has been found. For example, Japanese Unexamined Patent Publication No. 146412/1991 discloses that active carbon was washed, and the residual phosphoric acid was recovered and recycled for re-use. However, it is inefficient and industrially impractical to re-use phosphoric acid recovered simply by washing.

Further, the control of the concentration of the aqueous phosphoric acid solution used as an activating agent is an indispensable operation in order to conduct the activation reaction efficiently, and various proposals have been made, including a neutralization titration method for ammonium phosphomolybdate, a chelate titration method for ammonium magnesium phosphate, a potassium permanganate titration method for ammonium phosphomolybdate, a current titration method by means of uranyl acetate (Kolthoff-Cohn method) and a colorimetric analysis by reduction with stannous chloride. However, such conventional analytical methods have been time-consuming and are not practically useful as a method for controlling the operation for industrial production.

Under these circumstances, the present inventors have conducted extensive studies to present a process for industrially advantageously obtaining granulated active carbon product which hardly undergoes degradation and which has a surface configuration excellent in abrasion resistance, as a process for producing granulated active carbon by a reagent-activating method. As a result, it has been found that when molding of a kneaded product of the starting material for active carbon and an activating reagent, is conducted in the presence of a certain specific additive, the surface condition of the resulting granules will be good, and when such granules are baked, excellent granulated active carbon which hardly undergoes degradation can be obtained. The present invention has been accomplished on the basis of this discovery. Further, under the above circumstances, the present inventors have conducted extensive studies also to present a process for industrially advantageously obtaining an active carbon product having low unit production cost by efficiently recovering and re-using the reagent used for activation and/or a compound formed by the activation reaction after activation treatment, as a process for producing active carbon by a reagent activating method. As a result, they have found an efficient process for recovering an unreacted activating reagent, etc. at a high concentration from the baked product after activation and recycling it for re-use, and a simple and effective means for controlling the concentration of the activating reagent.

Namely, the present invention provides granulated active carbon having a specific surface area of from 60 to 3,000 $m^2$/g as measured by a liquid nitrogen S-BET method (a multipoint method) and a degradation ratio of not higher than 1.5% as measured by a paint conditioner test method.

Further, the present invention provides a process for producing granulated active carbon as defined above, which comprises impregnating and kneading an activating reagent to a carbonaceous material to be activated by the reagent, to obtain a kneaded product, granulation-molding the kneaded product to obtain granules, and baking the granules to obtain active carbon, wherein the granulation molding is carried out in the presence of a polyhydric alcohol.

In the accompanying drawings:

Figure 1 shows a process flow chart for the process of the present invention.
Figure 2 shows a process flow chart for the suspension washing step in Example 1.
Figure 3 is a graph showing the relation between the specific gravity of phosphoric acid and the content of phosphoric acid in Examples 1 and 2.

Now, the present invention will be described in detail with reference to the preferred embodiments.

Firstly, the material which can be used as a starting material for active carbon in the present invention, may be any material so long as it is a carbonaceous material which can be activated by a reagent. As such a material, various carbonaceous materials are known, including, for example, as wooden materials, cellulose type such as chips of wood or coconuts shells, and starch type such as nuts, millet or corn. Further, mineral materials such as peat and brown coal are also known. Among them, wooden materials, particularly cellulose materials, are preferred, since the physical properties of active carbon thereby obtained will be particularly excellent. The size of such a starting material is not particularly limited. However, a particle size is preferably at most 5 mm, so that the material can readily be mixed with an activating agent and can readily be activated and molded.

The activating reagent to be used in the present invention, is not particularly limited so long as it is a reagent having an activating function. Any one of reagents which are commonly used for a so-called reagent-activating method, can be employed. For example, zinc chloride, calcium chloride, sodium hydroxide or phosphoric acid is suitable. Among them, zinc chloride or phosphoric acid is preferred, since the physical properties of the resulting active carbon will be particularly excellent. Further, a reagent known as a reagent having a dehydrating, oxidizing or corrosive property, such as potassium sulfide, sulfuric acid or various alkali materials, may also be used.

The concentration and the amount of such an activating reagent may be suitably selected depending upon the type of the reagent or the amount of the starting material. For example, in the case of phosphoric acid, the amount is usually from 40 to 85 wt%, preferably from 50 to 75 wt%, as calculated as orthophosphoric acid, and the blend ratio with the carbonaceous material is preferably in a dry solid weight ratio of phosphoric acid/carbonaceous material = 2/1 to 1/1.

More preferably, among theses activating reagents, phosphoric acid, particularly orthophosphoric acid or paraphosphoric acid, is used. Among them, orthophosphoric acid is preferred, since the physical properties of active carbon thereby obtained will be particularly excellent.

The concentration and the amount of such a phosphoric acid may be suitably selected depending upon the type of the reagent, the amount of the starting material, etc. For example, the amount is from 40 to 85 wt% (specific gravity: 1.245 to 1.690 at 15/4°C), preferably from 50 to 75 wt% (specific gravity: 1.332 to 1.582 at 15/4°C), as calculated as orthophosphoric acid, and the blend ratio with the carbonaceous material is preferably in a dry solid weight ratio of phosphoric acid/carbonaceous material = 2/1 to 1/1.

For the impregnation and kneading of the above carbonaceous material and the activating reagent, these materials are usually charged into a mechanical mixing and kneading apparatus, such as a kneader, followed by kneading.

As a mode of kneading, the activating reagent and the carbonaceous material are kneaded for example at a temperature of from room temperature to 200°C, preferably from 100 to 180°C for from 5 minutes to 8 hours, preferably from 2 to 4 hours (initial kneading). Thereafter, a polyhydric alcohol, which will be described hereinafter, is added thereto, followed by kneading, and such kneading after addition (final kneading) is carried out at a temperature of from room temperature to 200°C, preferably from 100 to 180°, within 30 minutes, preferably within 15 minutes. By such kneading, the activating reagent will be impregnated to the carbonaceous material. The kneaded product thus obtained is usually a dry powder.

In addition to the carbonaceous material and the activating reagent, a binder, etc., may be added as the case requires. As the binder, an organic binder such as sodium lignin sulfonate or a resin, or an inorganic binder such as bentonite or pitch, is known.

Then, the above kneaded product is granulation-molded.

In the present invention, it is essential to conduct the granulation-molding in the presence of a specific additive i.e. a polyhydric alcohol. The polyhydric alcohol which can be used, may, for example, be a dihydric or higher alcohol such as glycerol, pentaerythritol, pinacol, 1,4-butanediol, 2-hydroxylmethyl-1,4-butanediol, polybutylene glycol, polyethylene glycol, polypropylene glycol or glycerol. Among them, polyethylene glycol, polypropylene glycol or glycerol, particularly glycerol, is preferred. As the valence of the alcohol, a trihydric or higher alcohol is preferred. The molecular weight is usually from 90 to 12,000, and the one having a molecular weight of from 90 to 1,000 exhibits particularly excellent effects.

The polyhydric alcohol is used usually in an amount of from 1 to 50 wt%, preferably from 3 to 15 wt%, relative to the dry solid content in the blend proportion to the carbonaceous material. If the amount is too small, adequate effect for preventing degradation of the product intended by the present invention, is hardly obtained. On the other hand, if it is too much, the granules tend to adhere to one another, whereby the effect for preventing degradation of the product is likely to be inadequate. Further, the adsorption ability of the resulting active carbon is likely to be low.

The reason as to why the effects of the present invention can be obtained by the addition of such a polyhydric alcohol, has not yet been clearly understood. However, for some reason, the surface condition of the resulting active carbon becomes very clean, whereby it is excellent in the abrasion resistance and accordingly hardly undergoes degradation.

The timing for adding the polyhydric alcohol is not particularly limited, and it may simply be present together with the kneaded product of the carbonaceous material and the activating reagent during the granulation-molding. The effects of the present invention can be achieved, so long as the polyhydric alcohol is sufficiently dispersed. Accordingly, it may be added to the kneaded product or it may be added to the carbonaceous material and the activating reagent before the kneading. Otherwise, it is also possible to add the activating reagent to the carbonaceous material and then carry out the kneading while sequentially adding the binder and the polyhydric alcohol.

The apparatus used for molding is not particularly limited, and an extrusion molding machine or a press molding machine is usually employed. For example, a method of molding under heating to a temperature of from 50 to 100°C, or a method of molding at room temperature after cooling the kneaded product to the room temperature, may, for example, be employed. In the present invention, heating is not particularly required, and the molding can be adequately carried out at room temperature. The resulting granules will be in the form of pellet-like granules having a diameter of from 0.35 to 10 mm in the case of extrusion molding. Whereas, in the case of press molding, the molded product is pulverized into pulverized granules having a diameter of from 0.5 to 10 mm.

The granules obtained by granulation-molding may preferably be subjected to a rolling operation prior to baking. By the rolling operation, the abrasion resistance of the finally obtainable active carbon may be further improved. The rolling operation may sufficiently be carried out, for example, by a trommel or a similar rolling apparatus, at a temperature of at most 100°C, usually from room temperature to 100°C, within two hours.

The above granulated products are baked to obtain active carbon. The baking method is not particularly limited, and a conventional method may be employed. The baking is usually carried out by heating the granules to a maximum temperature of from 500 to 700°C. An equipment capable of controlling the gas atmosphere and carrying out the heat treatment, such as a tunnel furnace or a rotary kiln, may be employed. Further, it is also possible to employ a method of improving the ability of adsorption of active carbon by two step heating as disclosed in e.g. Japanese Unexamined Patent Publication No. 127912/1994.

After baking, the baked product is subjected to suspension washing with hot water in accordance with a conventional method, to remove the reagent used for activation, and then, dried. The suspension washing is carried out by suspending the baked product with water at a temperature of from room temperature to 100°C, leaving the suspension for from 5 minutes to 12 hours, preferably from 20 to 40 minutes, and then separating the product by filtration. This operation is repeated until the activating reagent is no longer detected from the filtrate. The drying is carried out usually at a temperature of at most 500°C, preferably from 100 to 150°C.

By the above described process of the present invention, it is possible to obtain active carbon of the present invention which is excellent in both adsorption performance and abrasion resistance. The active carbon of the present invention has a specific surface area of from 600 to 3,000 $m^2$/g as measured by a liquid nitrogen S-BET method (a multipoint method) and a degradation ratio of not higher than 1.5 % as measured by a paint conditioner test method. Here, the degradation ratio as measured by a paint conditioner test method is determined in such a manner that a dry sample is put into a 140 ml mayonnaise bottle (made of hard glass with an inner diameter of 4.4 cm, a height of 9.5 cm and a wall thickness of 3 mm and having a metal cover), then, the bottle is fixed in a measuring apparatus, vibration is then exerted $10^7$ times in an up and down direction under an acceleration of 3 G at an average of 40 Hz, whereupon the sample is shieved with a screen of 60 mesh, and the weight of the sample on the screen was measured to determine the amount of the sample passed through the screen, whereby the degradation ratio is represented by the weight % of the sample passed through the screen, relative to the total amount of the sample tested. Further, the active carbon of the present invention can be made to have a specific surface area of from 1,500 to 2,500 $m^2$/g as measured by a liquid nitrogen S-BET method (a multipoint method) or to have a degradation ratio of not higher than 1%, or it may be made to have the both physical properties simultaneously. Further, in addition to the above physical properties, the active carbon may be made to have an effective n-butane adsorptivity of at least 40 g/100 g. Namely, the active carbon of the present invention is a novel and highly valuable active carbon which has excellent properties such that the specific surface area is large, the adsorption performance is excellent, yet the degradation ratio is low, and the abrasion resistance is excellent, and which is useful for various applications.

In a case where phosphoric acid is used as the activating reagent, it is advisable to recover phosphoric acid used for activation or a phosphorus compound formed by the activation reaction, from the baked product obtained by baking the above granules, after the baking. The recovery method is not particularly limited. For example, it is possible to adopt a means such as counter current washing wherein the baked product and liquid are countercurrently passed through a packed layer. However, recovery by suspension washing which will be described hereinafter, is preferred, since such a recovery method is excellent in washing effects, and efficient washing can easily be carried out. Here, suspension washing is carried out in such a manner that the above baked product is suspended and washed with water, preferably warm water, to remove the reagent used for activation, etc. from the active carbon, and the obtained active carbon is then dried. In the suspension washing, the baked product is suspended in water in an amount of from 1.1 to 100 times by volume, preferably from 2 to 5 times by volume, relative to the baked product at a temperature of at most 100°C, usually from room temperature to 100°C, then left to stand for from 5 minutes to 12 hours, preferably from 20 to 40 minutes and then separated by filtration.

If the amount of water for suspension is too small, it tends to be difficult to separate water from the baked product which is a carbon material. On the other hand, if the amount of water is too much, the apparatus for treatment is obliged to be large, and the installation costs will be high. Further, the amount of treating water increases, and the phosphoric acid concentration in the recovered water decreases. Accordingly, the unit cost for production of active carbon increases, and such a process is inefficient. For such reasons, it is advisable to select the amount of water to be used, within the above-mentioned range.

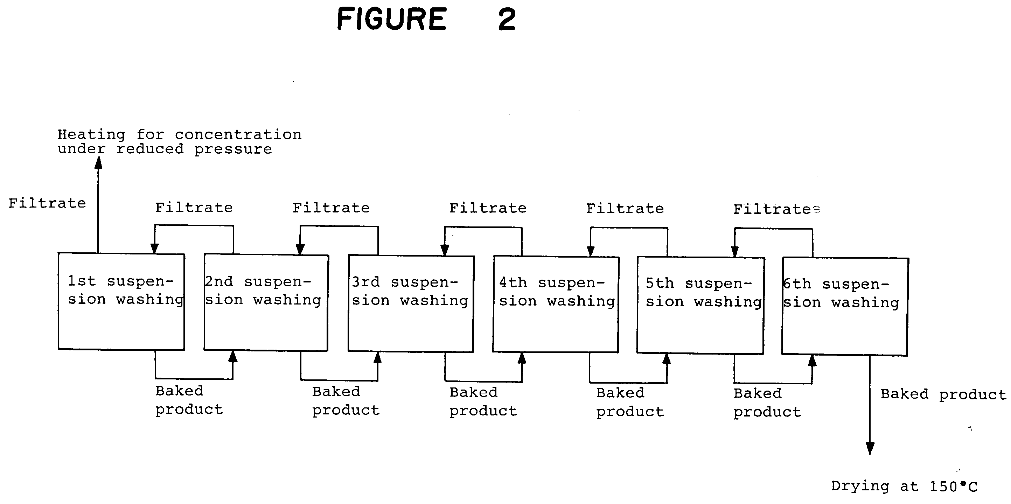

It is particularly effective to conduct suspension washing of the baked product a plurality of times, for example, by the following method. Figure 2 shows a flow chart of the process for washing the baked product. As shown in Figure 2, the baked product from the first suspension washing is subjected to the second suspension washing, followed by the third, the fourth ... the n th suspension washing. The washing is repeated in this manner until the reagent or the like is no longer detected from the filtrate. A filtrate after washing will result each time, and this filtrate contains the activating reagent, etc. The concentration of the activating reagent decreases as n increases. Accordingly, it is preferred to countercurrently move the washing liquid and the baked product so that for the n th washing, the (n+1)th or subsequent filtrate is employed. Here, either the filtrate or the baked product after washing may be moved. And, the filtrate obtained from the first suspension washing is concentrated by heating and may again be used for activation of active carbon.

If such a washing method is employed, washing of active carbon can simply and sufficiently be carried out, and recovery of a phosphoric acid solution of a high concentration can efficiently be carried out.

Contrary to this, if the filtrate obtained from the first suspension washing is concentrated in its entire amount without conducting suspension washing by means of the filtrate, the amount of the filtrate which must be concentrated by heating, will be as large as five times the case where such suspension washing is conducted. Accordingly, the size of the apparatus for concentration by heating is obliged to be large, and the operation cost will be about five times. Consequently, the unit cost for production of active carbon increases substantially, such being undesirable as a process for producing active carbon which must be competitive costwise. Further, the phosphorus compound formed by the activation reaction will react with water to form phosphoric acid. Accordingly, it is readily possible to recovery phosphoric acid from the baked product by washing the active carbon with water.

It is advisable to repeat the above described suspension washing operation until phosphoric acid is no longer detected from the filtrate from the final suspension washing.

Now, one example of the operation for concentrating the recovered phosphoric acid will be described.

Firstly, the filtrate obtained by suspension washing of the baked product is put in a reactor made of a material having heat resistance and corrosion resistance against phosphoric acid, such as graphite, and heated while reducing the pressure by an equipment capable of efficiently reducing the pressure, such as a vacuum pump or an ejector, preferably an ejector, to evaporate water and concentrate the filtrate until the specific gravity of phosphoric acid becomes from 1.245 to 1.69, preferably from 1.332 to 1.582 at 15/4°C.

When an ejector is used, by employing water or sea water of not higher than 40°C, preferably water or sea water of from 0 to 5°C, water evaporated from the aqueous phosphoric acid solution can be liquefied, and reduction of the pressure can be carried out efficiently, whereby the efficiency for concentration of the aqueous phosphoric acid solution can be increased. Further, it is preferred to employ a method wherein the temperature of water is made lower than the external temperature by means of a water cooling tower or a condenser, and the water thus cooled, is used in the ejector. The water or sea water used in the ejector may be recycled for use or may not be recycled.

The concentrated phosphoric acid solution thus obtained is re-used as an activating reagent. In such a case, by carrying out the concentration control of the concentrated phosphoric acid solution by measurement of the specific gravity of the aqueous solution by means of a hydrometer, the concentration of the aqueous phosphoric acid solution can be detected very easily as compared with conventional methods such as a neutralization titration method of ammonium phosphomolybdate, a chelate titration method of ammonium magnesium phosphate, a potassium permanganate titration method of ammonium phosphomolybdate, a current titration method with uranyl acetate (Kolthoff-Cohn method) and a colorimetric analysis by reduction with stannous chloride, and production of active carbon by a reagent-activation method using phosphoric acid, can be carried out very efficiently.

The relation between the concentration and the specific gravity of an aqueous phosphoric acid solution is disclosed, for example in a chemical handbook, and such information may be utilized.

After removal of phosphoric acid, etc. as described above, the active carbon is dried. This drying of the active carbon is conducted usually at a temperature of at most 500°C, preferably from 100 to 150°C.

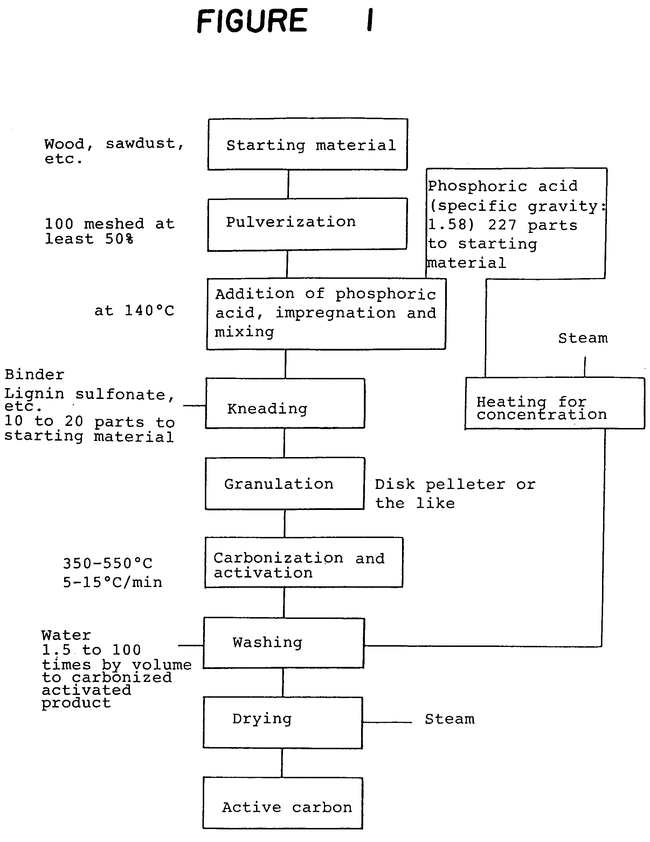

If the filtrate is used without concentration or washing by means of the filtrate, the concentration of phosphoric acid in the solution is low, and it takes a long treating time until granulation can be done after impregnation and kneading, and the size of the apparatus is obliged to be large, and the operation cost will be as high as about five times. Accordingly, the unit cost for production of the active carbon increases, such being undesirable as a process for producing active carbon which must be competitive costwise. In Figure 1, the above described example of the process of the present invention is shown by a process flow chart.

Further, if phosphoric acid is not recycled for use, fresh phosphoric acid has to be used every time, whereby the unit cost for production of active carbon increases corresponding to the cost for the phosphoric acid. Further, an additional cost will be required for the treatment of the phosphorus-containing waste water resulting from the suspension washing of the baked product, and such is not desirable as a process for producing active carbon which must be competitive costwise.

By the above described process of the present invention, it is possible to obtain active carbon excellent in the unit cost for production. In the process for producing active carbon according to the present invention, the activating reagent used for the activation reaction is recycled for use, whereby the amount of the reagent used can be reduced, and flow out of the reagent out of the system can be minimized. Accordingly, the unit cost for producing active carbon by the reagent activation method can be reduced, and active carbon highly competitive costwise, can be supplied efficiently on an industrial scale.

Now, the present invention will be described in further detail with reference to Examples. However, it should be understood that the present invention is by no means restricted to such specific Examples.

As an index for the degree of degradation, the production ratio of fine powder after the abrasion test was shown in terms of a degradation ratio as measured by a paint conditioner test method. Such a measuring method is as follows.

### Degradation ratio measured by a paint conditioner test method

(1) A sample is classified to remove fine powder passing through a 0.25 mm mesh.
(2) This sample is sampled in an amount of 60 ml by means of a microfeeder at a supply rate of 1 ml/min.
(3) This sample is dried at 150°C for 3 hours, then left to cool in a desiccator and accurately weighed (A g).
(4) The dried sample is put into a 140 ml mayonnaise bottle (made of hard glass having an inner diameter of 4.4 cm, a height of 0.5 cm and a wall thickness of 3 mm and having a metal cover), and the bottle is fixed to a paint shaker type measuring apparatus (Paint Conditioner 5410-X3 Model, manufactured by Red Devil Company, U.S.A.), and vibration is exerted $10^7$ times in an up and down direction at an acceleration of 3G at an average of 40 Hz.
(5) From the mayonnaise bottle, the sample is put on a 0.25 mm mesh screen.
(6) From below the screen, fine powder is removed under suction for one minute by an electric vacuum cleaner.
(7) The sample remaining on the screen was dried at 150°C for 3 hours, then left to cool in a desiccator and accurately weighed (B g).
(8) From the above measured data, the degradation ratio is calculated as follows.

$$\text{Degradation ratio (\%)} = 100 \times (A\text{-}B)/A$$

As an index for the adsorption performance, a saturated effective adsorptivity of n-butane was measured. n-butane is one of gasoline vapor components, and the saturated effective adsorptivity of n-butane is regarded as a typical index for the gasoline vapor adsorption performance. The measuring method is as follows.

### Effective n-butane adsorptivity

(1) A sample is dried at 150°C for 3 hours and left to cool in a desiccator.
(2) The empty weight of a glass column having an inner diameter of 15.4 mm is measured (D g).
(3) This column is packed with the sample in a layer height of 5.4 cm.
(4) This column is sealed, and the weight is measured (E g).
(5) The column is set in a constant temperature water tank at 25°C, and n-butane (purity: at least 99.9%) is passed therethrough upwardly for 15 minutes at a flow rate of 105.4 ml/min.
(6) The column is taken out and weighed (F g).
(7) The column after adsorption is again set in the apparatus, and dry air of 25°C is passed downwardly for 20 minutes at a flow rate of 100 ml/min.
(8) The column is taken out and weighed (G g).
(9) From the above measured data, a saturated effective adsorptivity is calculated as follows.

$$\text{n-butane saturated effective adsorptivity (g/100 gAC)} = 100 \times (F\text{-}G)/(E\text{-}D)$$

EXAMPLE 1

Preparation of a baked product

1.0 kg of a dried product of wood chips of at most 2.0 mm and 2.0 kg of an aqueous phosphoric acid solution having a concentration of 85 wt% (specific gravity: 1.69) were kneaded at 140°C by a batch system kneader. Then, 150 g of an aqueous sodium lignin sulfonate solution as a binder and 50 g of glycerol as an additive were added thereto, and the mixture was kneaded for 15 minutes by the kneader. The kneaded product was granulated by extrusion by a disk pelleter having a die with a diameter of 2.5 mm, to obtain pellets of from about 3 to 5 mm. The pellets were rolled for one hour by a trommel. After rolling, the pellets were baked by a rotary kiln of external heating system by supplying a gas mixture of hydrogen and air. Firstly, the temperature was raised from 100°C to 250°C at a rate of 12°C/min at an oxygen concentration of 0%. Then, the oxygen concentration was adjusted to 21%, and the temperature was raised from 250°C to 350°C over a period of two hours. Then, the oxygen concentration was adjusted to 4%, and the temperature was raised from 350°C to 550°C at a rate of 12°C/min. After the temperature reached 550°C, the baked product was immediately cooled.

Washing and drying

The baked product was suspended with water at 80°C, then left to stand for 30 minutes and separated by filtration. This operation from suspension washing to separation by filtration, was repeated five times, whereupon the activating reagent became no longer detectable from the filtrate. Then, the product was dried at 150°C.

With respect to the obtained product, the degradation ratio, the specific surface area and the effective n-butane adsorptivity were measured, and the results as shown in Table 1 were obtained.

EXAMPLES 2 TO 4

With respect to the products prepared under the same conditions as in Example 1 except that the type or the amount of the polyhydric alcohol added, was different, the degradation ratios, the specific surface areas and the effective n-butane adsorptivities were measured, and the results as shown in Table 1 were obtained.

COMPARATIVE EXAMPLES 1 TO 3

With respect to active carbons prepared under the same conditions as in Example 1 except that the type or the amount of the additive was different, the degradation ratios, the specific surface areas and the effective n-butane adsorptivities were measured, and the results as shown in Table 1 were obtained.

Table 1

| | Additive added at the time of kneading | | Degradation ratio (%) | S-BET specific surface area ($m^2$/g) | Effective n-butane adsorptivity (g/100 g) |
|---|---|---|---|---|---|
| | Type | Amount (wt%) | | | |
| Example 1 | Glycerol | 5 | 0.4 | 2430 | 45.0 |
| Example 2 | Glycerol | 10 | 0.6 | 2140 | 43.5 |
| Example 3 | Polypropylene glycol | 5 | 1.4 | 2020 | 42.0 |
| Example 4 | Polyethylene glycol | 5 | 1.2 | 1980 | 42.5 |
| Comparative Example 1 | Nil | 0 | 10.0 | 1910 | 43.0 |
| Comparative Example 2 | Water | 5 | 9.8 | 1990 | 42.3 |
| Comparative Example 3 | Methanol | 5 | 8.5 | 1820 | 41.5 |

EXAMPLE 5

The baked product obtained in Example 1 (Preparation of a baked product) was subjected to suspension washing in accordance with the flow chart shown in Figure 2. Here, either the baked product or the filtrate may be moved to conduct the suspension washing of the baked product as a carbon material and the filtrate. However, in this Example, the baked product was moved.

The baked product was suspended with the filtrate from the second suspension washing at 80°C, left to stand for 30 minutes and then separated by filtration by means of a glass filter with a mesh not to pass the baked product. (First suspension washing)

The baked product collected by filtration was suspended with the filtrate from the third suspension washing at 80°C, left to stand for 30 minutes and then separated by filtration by means of a glass filter with a mesh not to pass the baked product. (Second suspension washing)

The baked product collected by filtration, was suspended with the filtrate from the fourth suspension washing at 80°C, left to stand for 30 minutes and then separated by filtration by means of a glass filter with a mesh not to pass the baked product. (Third suspension washing)

The baked product collected by filtration, was suspended with the filtrate from the fifth suspension washing at 80°C, left to stand for 30 minutes and then separated by filtration by means of a glass filter with a mesh not to pass the baked product. (Fourth suspension washing)

The baked product collected by filtration, was suspended with the filtrate from the sixth suspension washing at 80°C, left to stand for 30 minutes and then separated by filtration by means of a glass filter with a mesh not to pass the carbon material. (Fifth suspension washing)

The baked product collected by filtration, was suspended with water in an amount of two times by volume of the baked Product at 80°C, left to stand for 30 minutes and then separated by filtration by means of a glass filter having a mesh not to pass the baked product. (Sixth suspension washing)

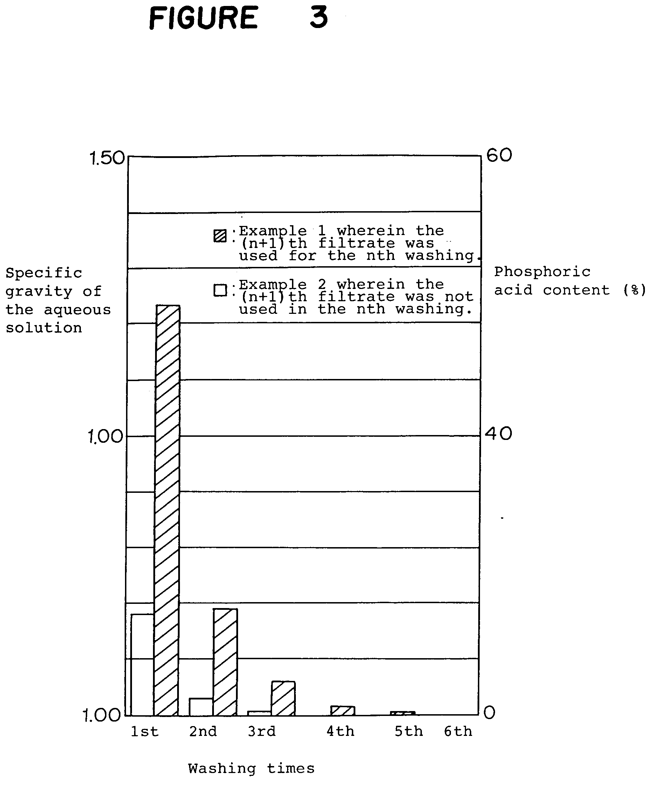

From the filtrate obtained by the sixth suspension washing, no phosphoric acid was detected. The specific gravity of the filtrate and the concentration of phosphoric acid after each suspension washing are shown in Figure 3. As is evident from Figure 3, the specific gravity of the filtrate corresponds very well to the concentration of phosphoric acid in the filtrate. This indicates that the concentration of phosphoric acid can be controlled very easily, and production of active carbon can efficiently be carried out, by recycling phosphoric acid for the activation treatment of active carbon and conducting the control of the concentration of phosphoric acid at that time by the measurement of the specific gravity of the aqueous solution.

The baked product obtained by the sixth suspension washing, was dried at 150°C to obtain active carbon.

The filtrate from the first suspension washing in the above washing process, was recovered and concentrated to a specific gravity of the aqueous solution of 1.69 while reducing the pressure by an aspirator. Then, phosphoric acid reagent was added afresh to make 2.0 kg of an aqueous phosphoric acid solution having a concentration of 85 wt%. The aqueous solution and 1.0 kg of a dried product of wood chips of at most 2.0 mm were subjected to kneading, baking, washing with water and drying treatments under the above-mentioned conditions. The active carbon obtained by using such regenerated phosphoric acid, was of the same quality as the product obtained by using fresh phosphoric acid.

EXAMPLE 6

Preparation of active carbon and recovery of phosphoric acid were carried out in the same manner as in Example 5 except that water was used instead of the (n+1)th or subsequent filtrate, for the suspension washing. The concentration of phosphoric acid in the filtrate and the specific gravity are shown in Figure 3. Like in Example 5, the concentration of the phosphoric acid and the specific gravity correspond to each other very well, but as compared with Example 5 wherein washing was carried out by using the filtrate, the concentration of phosphoric acid was very low. This indicates that recovery of phosphoric acid by concentration under heating will be costly.

According to the present invention, in the process for producing granulated active carbon by a reagent-activation method, it is possible to obtain a product having a clean surface condition and being hardly degraded, on an industrial scale. Further, it is thereby possible obtain an inexpensive product efficiently on an industrial scale.

**Claims**

1. Granulated active carbon having a specific surface area of from 60 to 3,000 $m^2$/g as measured by a liquid nitrogen S-BET method (a multipoint method) and a degradation ratio of not higher than 1.5% as measured by a paint conditioner test method.

2. The granulated active carbon according to Claim 1, which has a specific surface area of from 1,500 to 2,500 $m^2$/g as measured by a liquid nitrogen S-BET method (a multipoint method).

3. The granulated active carbon according to Claim 1 or 2, which has a degradation ratio of not higher than 1% as measured by a point conditioner test method.

4. The granulated active carbon according to Claim 1, 2 or 3, which has an effective n-butane adsorptivity of at least 40 g/100 g.

5. A process for producing granulated active carbon as defined in Claim 1, which comprises impregnating and kneading an activating reagent to a carbonaceous material to be activated by the reagent, to obtain a kneaded product, granulation-molding the kneaded product to obtain granules, and baking the granules to obtain active carbon, wherein the granulation molding is carried out in the presence of a polyhydric alcohol.

6. The process for producing granulated active carbon according to Claim 5, wherein the polyhydric alcohol is a trihydric alcohol.

7. The process for producing granulated active carbon according to Claim 5 or 6, wherein the polyhydric alcohol is present in an amount of from 1 to 50 wt% relative to the carbonaceous material.

8. The process for producing granulated active carbon by a reagent-activating method according to any one of Claims 5 to 7, wherein the reagent used for activation and/or a compound formed by the activation reaction is recovered from the baked product after activation treatment, then concentrated under heating and re-used as an activating agent.

9. The process for producing granulated active carbon according to Claim 8, wherein the recovery of the reagent used for activation and/or the compound formed by the activation reaction, from the baked product after activation treatment, is carried out by suspension washing in such a manner that a filtrate obtained in the (n+1)th or subsequent suspension washing, is used for the n th suspension washing, and a filtrate obtained in the first suspension washing is recovered by heating for concentration.

10. The process for producing granulated active carbon according to Claim 9, wherein water used for the suspension washing is in an amount of from 1.1 to 100 times by volume relative to the baked product.

11. The process for producing granulated active carbon according to any one of Claims 8 to 10, wherein the recovery of the reagent used for activation and/or the compound formed by the activation reaction, from the baked product, is carried out at a temperature of not higher than 100°C.

12. The process for producing granulated active carbon according to any one of Claims 8 to 11, wherein the heating for concentration is carried out under reduced pressure.

13. The process for producing granulated active carbon according to Claim 12, wherein an ejector is used to obtain the reduced pressure during the heating for concentration.

14. The process for producing granulated active carbon according to Claim 13, wherein water used for the ejector is adjusted to a temperature of at most 40°C at an inlet of the ejector, by means of a cooler.

15. The process for producing granulated active carbon according to any one of Claims 8 to 14, wherein a heat exchanger made of graphite is used for the heating for concentration.

16. The process for producing granulated active carbon according to any one of Claims 8 to 15, wherein a high pressure steam of from 1.5 to 50 $kg/cm^2$ is used as the heat source.

17. The process for producing granulated active carbon according to any one of Claims 8 to 16, wherein the reagent used for activation is phosphoric acid, and the compound formed by the activation reaction is a phosphorus compound.

18. The process for producing granulated active carbon according to Claim 17, wherein the concentration of phosphoric acid is controlled by measuring the specific gravity of the liquid by means of a hydrometer during the concentration for heating.

# FIGURE  I

Wood, sawdust, etc. — Starting material

100 meshed at least 50% — Pulverization

at 140°C — Addition of phosphoric acid, impregnation and mixing

Phosphoric acid (specific gravity: 1.58) 227 parts to starting material

Binder
Lignin sulfonate, etc.
10 to 20 parts to starting material — Kneading

Steam

Heating for concentration

Granulation — Disk pelleter or the like

350-550°C
5-15°C/min — Carbonization and activation

Water
1.5 to 100 times by volume to carbonized activated product — Washing

Drying — Steam

Active carbon

FIGURE 2

Heating for concentration
under reduced pressure

Filtrate    Filtrate    Filtrate    Filtrate    Filtrate    Filtrate

| 1st suspen-sion washing | 2nd suspen-sion washing | 3rd suspen-sion washing | 4th suspen-sion washing | 5th suspen-sion washing | 6th suspen-sion washing |

Baked
product

Baked
product

Baked
product

Baked
product

Baked
product

Baked product

Drying at 150°C

EP 0 747 321 A2

# FIGURE 3

Specific gravity of the aqueous solution

Phosphoric acid content (%)

▨ : Example 1 wherein the (n+1)th filtrate was used for the nth washing.

☐ : Example 2 wherein the (n+1)th filtrate was not used in the nth washing.

Washing times: 1st 2nd 3rd 4th 5th 6th